(19) Europäisches Patentamt / European Patent Office / Office européen des brevets

(11) **EP 4 140 815 A1**

(12) **EUROPEAN PATENT APPLICATION**
published in accordance with Art. 153(4) EPC

(43) Date of publication:
**01.03.2023 Bulletin 2023/09**

(21) Application number: **21843523.8**

(22) Date of filing: **30.06.2021**

(51) International Patent Classification (IPC):
**B60R 1/00** (2006.01)  **G08G 1/16** (2006.01)
**G06T 7/00** (2006.01)  **G06T 7/246** (2017.01)

(52) Cooperative Patent Classification (CPC):
**B60R 1/00; G06T 7/00; G06T 7/246; G08G 1/16**

(86) International application number:
**PCT/JP2021/024671**

(87) International publication number:
**WO 2022/014327 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2020 JP 2020120368**

(71) Applicant: **Sony Semiconductor Solutions Corporation**
**Atsugi-shi Kanagawa 243-0014 (JP)**

(72) Inventor: **YAMAMOTO, Hideaki**
**Atsugi-shi, Kanagawa 243-0014 (JP)**

(74) Representative: **Müller Hoffmann & Partner Patentanwälte mbB**
**St.-Martin-Strasse 58**
**81541 München (DE)**

(54) **INFORMATION PROCESSING DEVICE, INFORMATION PROCESSING METHOD, AND PROGRAM**

(57) The present technique relates to an information processing device, an information processing method, and a program that can improve tracking performance.

A feature information extracting unit extracts feature information about an object for each frame image, and a tracking unit tracks a vehicle in the frame image by using the feature information. The present technique is applicable to a driving support device with an onboard camera, for example.

Fig. 3

EP 4 140 815 A1

**Description**

[Technical Field]

The present technique relates to an information processing device, an information processing method, and a program, and particularly, to an information processing device, an information processing method, and a program that improve tracking performance.

[Background Art]

PTL 1 discloses a parking position recognition device that determines the parking position of a vehicle by verification of a recognized parking position and a number plate.
Moreover, a technique of tracking a vehicle traveling around one's own vehicle in driving support with an onboard camera or automated driving is known in recent years.

[Citation List]

[Patent Literature]

[PTL 1]
JP H8-96297 A

[Summary]

[Technical Problem]

Conventionally, in some cases, an object other than an object to be tracked is tracked during tracking.
The present technique was made in view of such circumstances so as to improve tracking performance.

[Solution to Problem]

An information processing device according to the present technique is an information processing device including a feature information extracting unit that extracts feature information about an object for each frame image, and a tracking unit that tracks the object in the frame image by using the feature information.
An information processing method according to the present technique is an information processing method causing an information processing device to: extract feature information about an object for each frame image, and track the object in the frame image by using the feature information.
A program according to the present technique is a program causing a computer to execute processing of: extracting feature information about an object for each frame image; and tracking the object in the frame image by using the feature information.
In the present technique, feature information about an object is extracted for each frame image, and the object is tracked in the frame image by using the feature information.

[Brief Description of Drawings]

[Fig. 1]

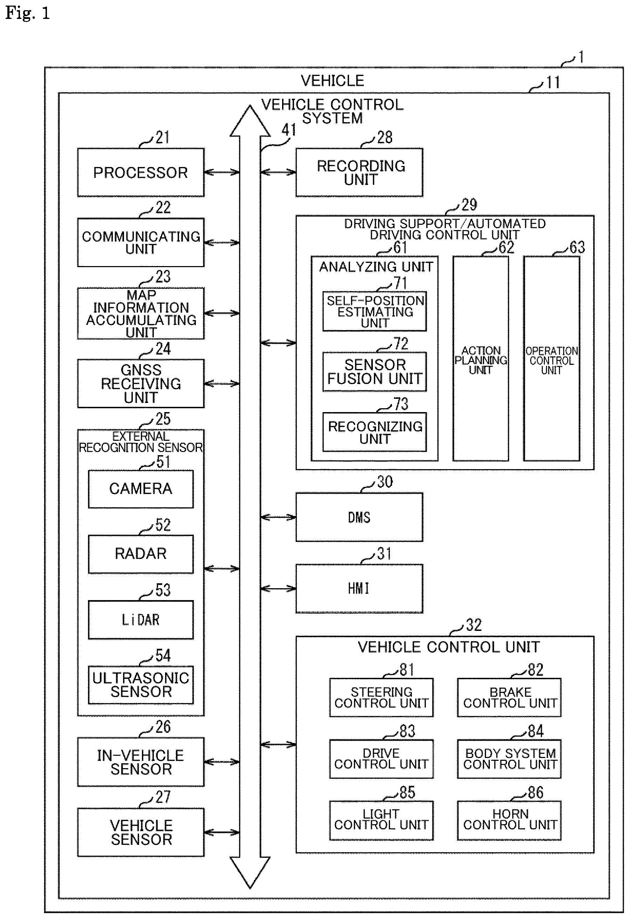

Fig. 1 is a block diagram illustrating a configuration example of a vehicle control system.
[Fig. 2]

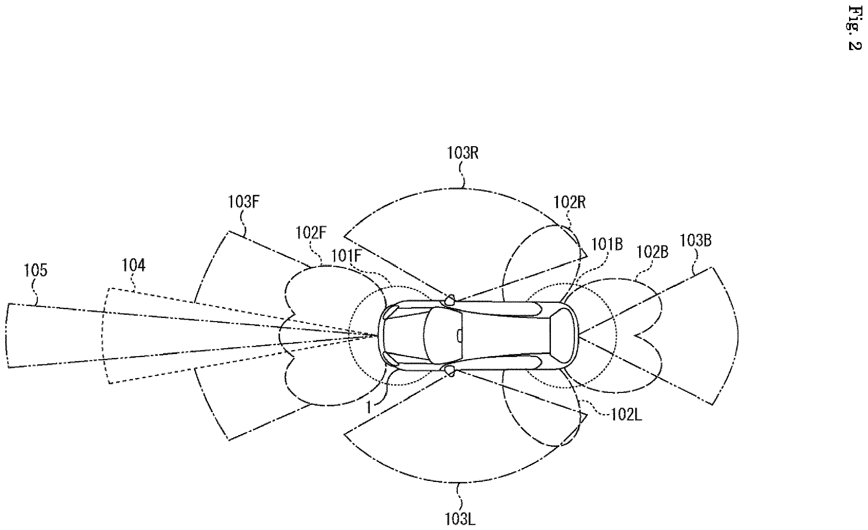

Fig. 2 illustrates an example of sensing areas.
[Fig. 3]

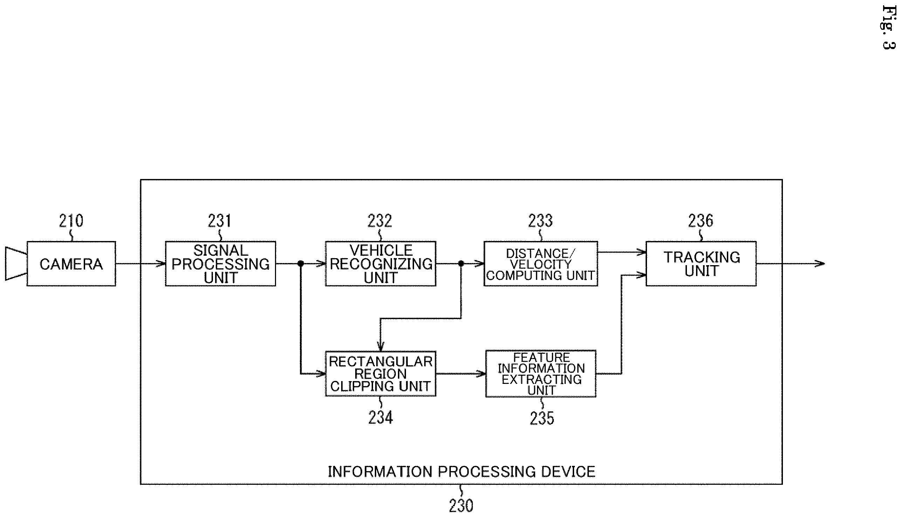

Fig. 3 is a block diagram illustrating a configuration example of an information processing device to which the present technique is applied.
[Fig. 4]

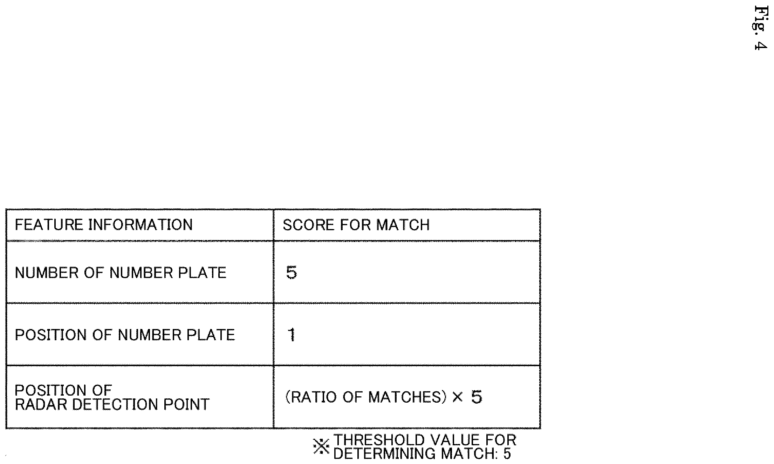

Fig. 4 indicates an example of scored feature information.
[Fig. 5]

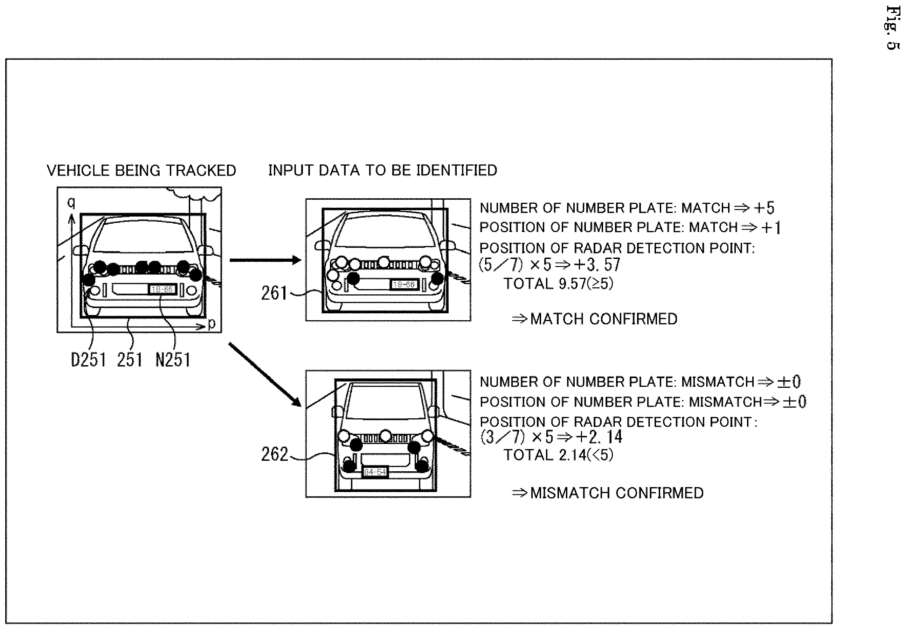

Fig. 5 illustrates an example of identification of a vehicle.

[Fig. 6]

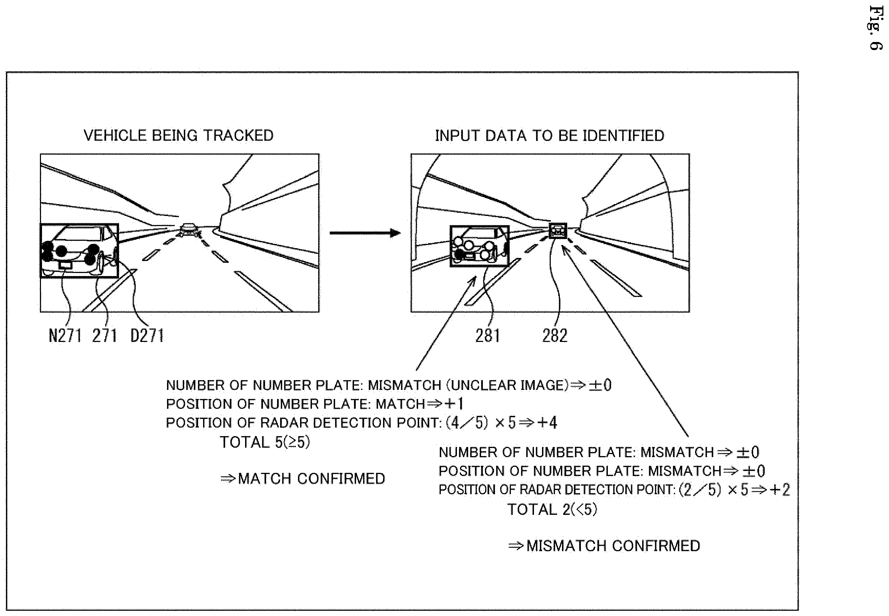

Fig. 6 illustrates an example of identification of a vehicle.
[Fig. 7]

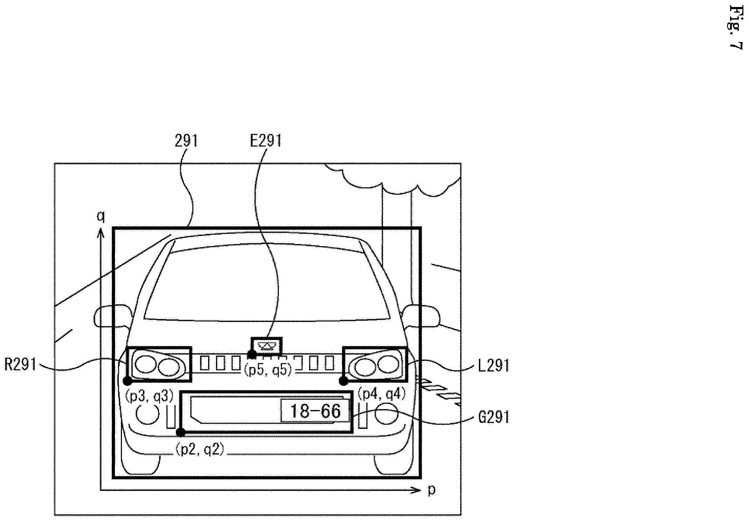

Fig. 7 illustrates an example of feature regions.
[Fig. 8]

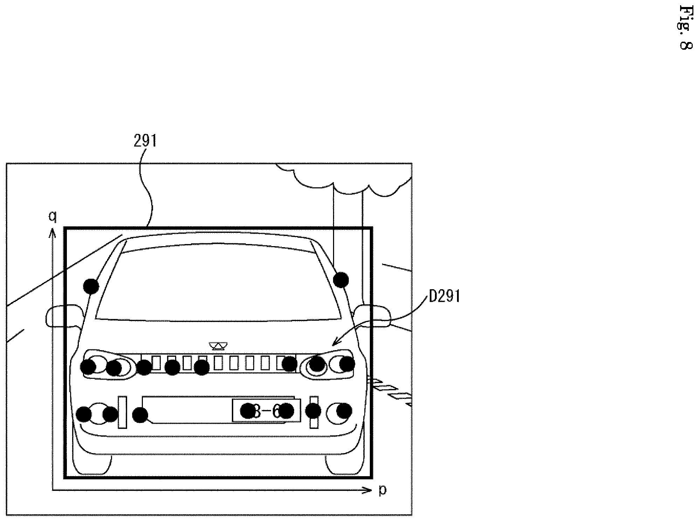

Fig. 8 illustrates an example of point group data.
[Fig. 9]

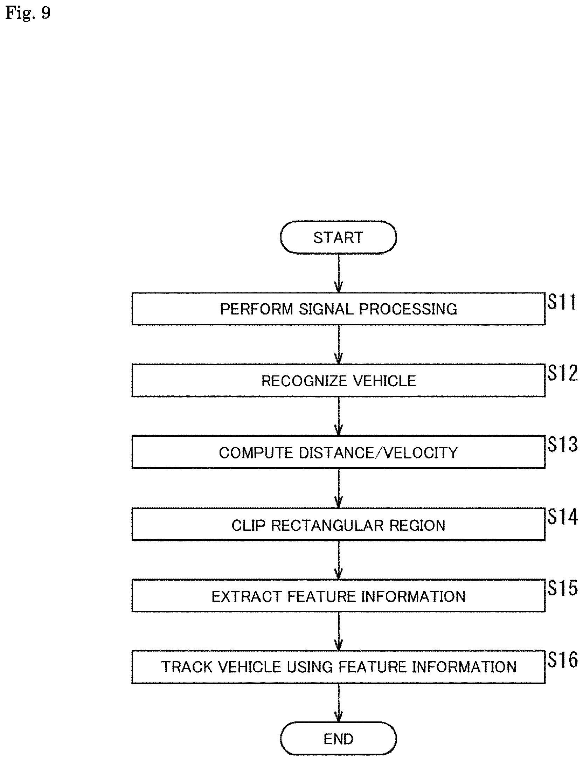

Fig. 9 is a flowchart for explaining vehicle tracking.
[Fig. 10]

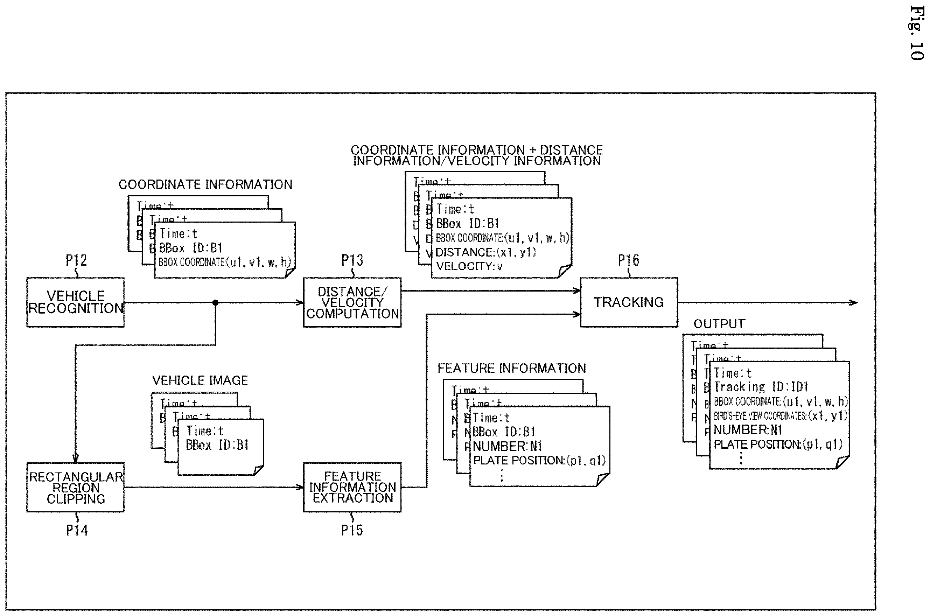

Fig. 10 is an explanatory drawing of a data flow in the vehicle tracking.
[Fig. 11]

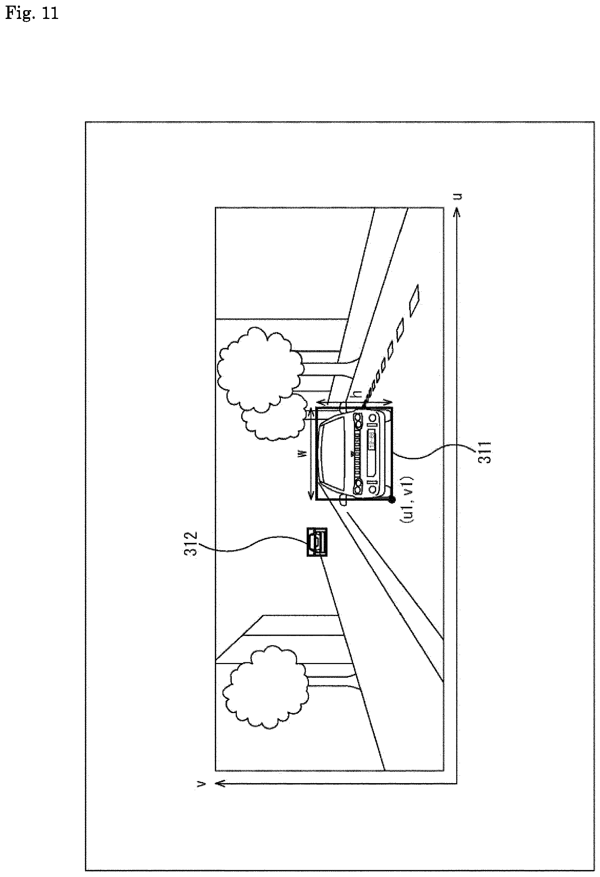

Fig. 11 is an explanatory drawing illustrating the detail of coordinate information.
[Fig. 12]

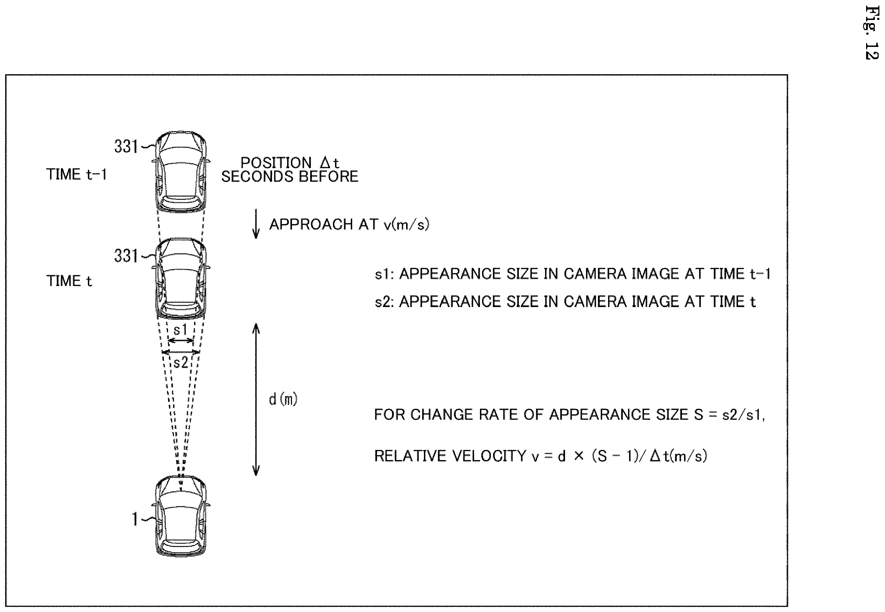

Fig. 12 illustrates an example of computation of a relative velocity.
[Fig. 13]

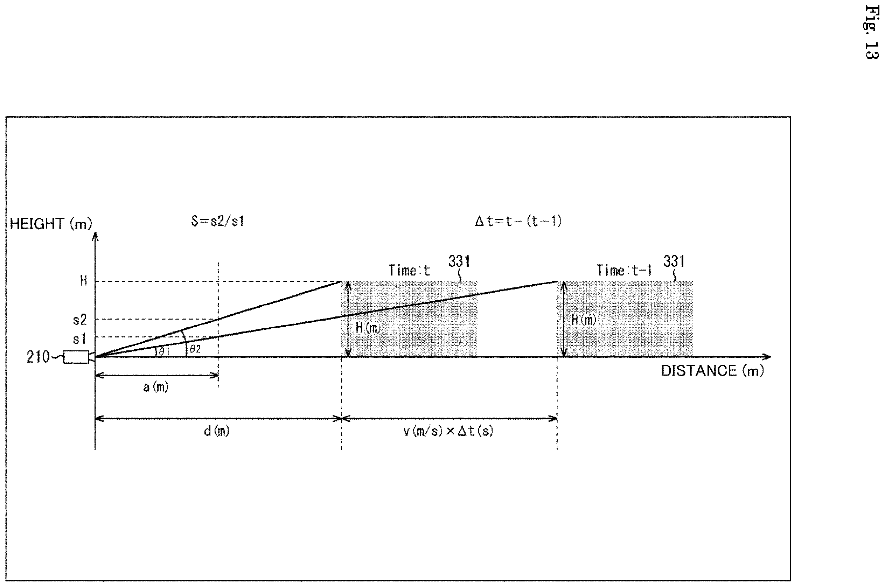

Fig. 13 illustrates an example of a computation of a relative velocity.
[Fig. 14]

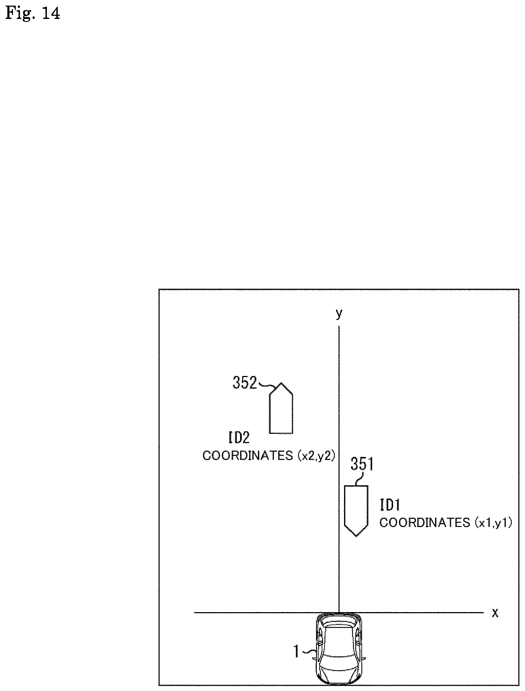

Fig. 14 illustrates an example of bird's-eye view coordinates.
[Fig. 15]

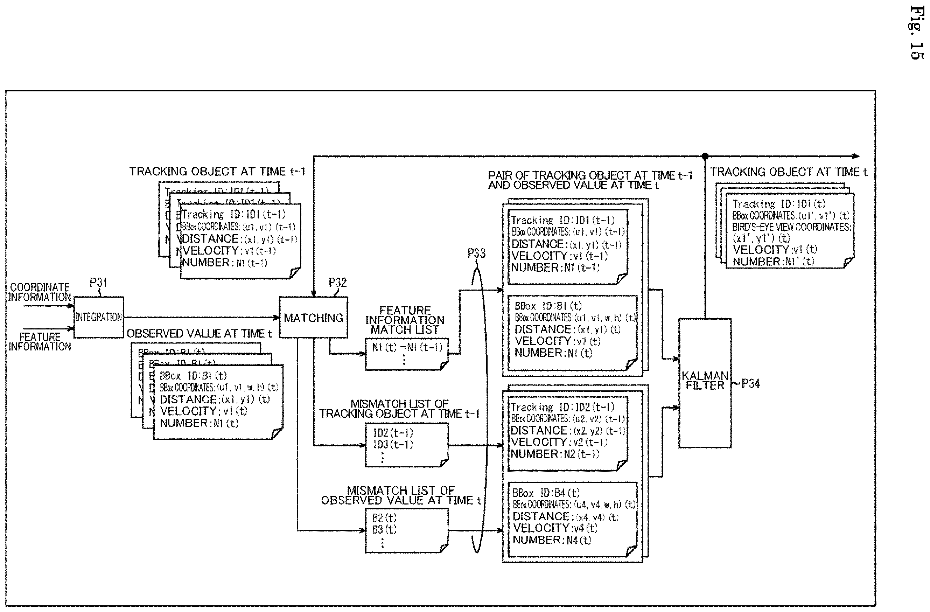

Fig. 15 is an explanatory drawing illustrating the detail of tracking.
[Fig. 16]

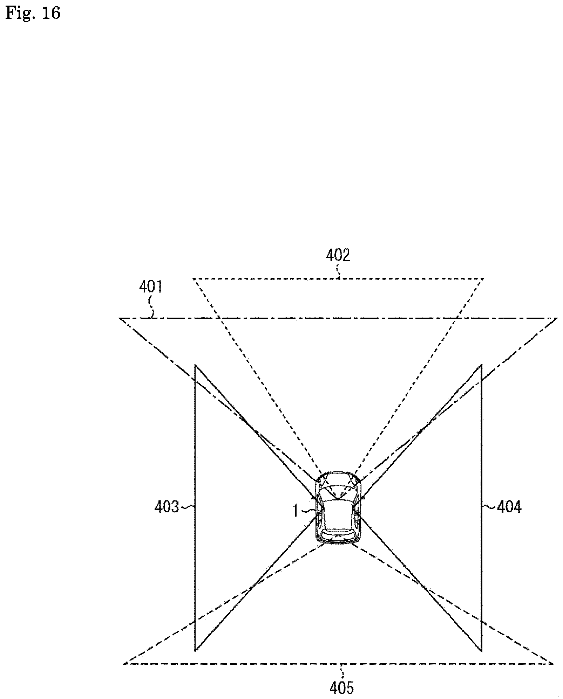

Fig. 16 illustrates an example of the imaging ranges of multiple onboard cameras.
[Fig. 17]

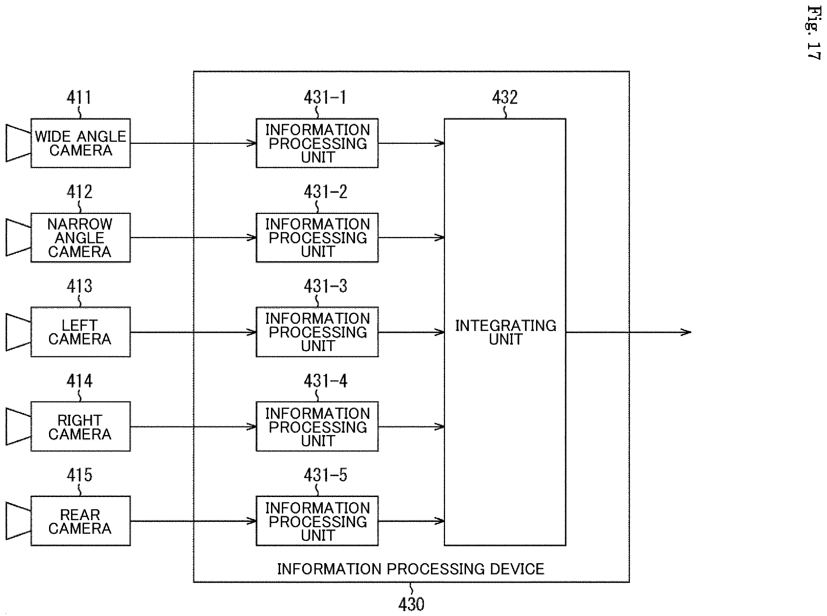

Fig. 17 is a block diagram illustrating another configuration example of the information processing device.
[Fig. 18]

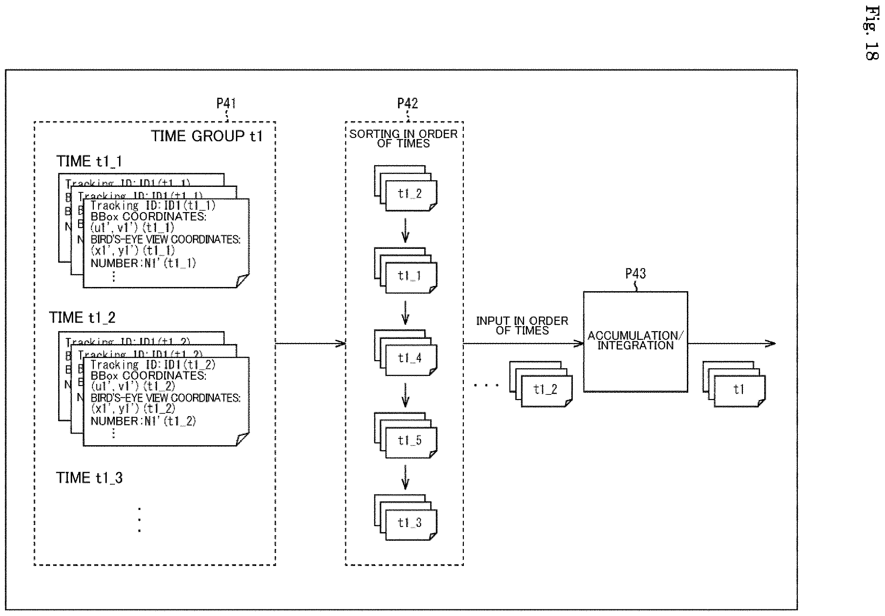

Fig. 18 is an explanatory drawing illustrating the detail of integration.
[Fig. 19]

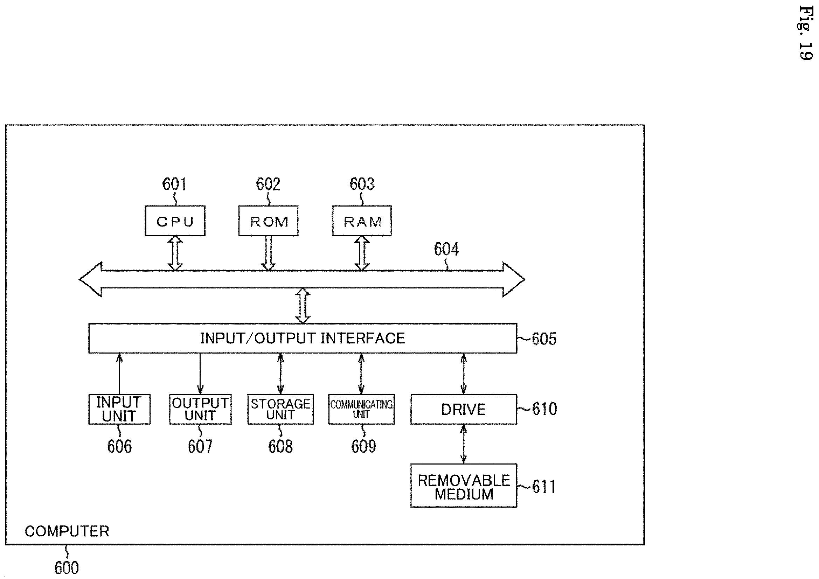

Fig. 19 is a block diagram illustrating a configuration example of a computer.

[Description of Embodiments]

A mode for carrying out the present technique (hereinafter referred to as an embodiment) will be described below. The description will proceed in the following order.

1. Configuration example of vehicle control system
2. Problem of conventional tracking
3. Configuration example of information processing device
4. Flow of vehicle tracking
5. Example of installation of multiple onboard cameras
6. Configuration example of computer

<1. Configuration example of vehicle control system>

Fig. 1 is a block diagram illustrating a configuration example of a vehicle control system 11 as an example of a mobile apparatus control system to which the present technique is to be applied.
The vehicle control system 11 is provided in a vehicle 1 and performs processing related to driving support and automated driving of the vehicle 1.
The vehicle control system 11 includes a processor 21, a communicating unit 22, a map information accumulating unit 23, a GNSS (Global Navigation Satellite System) receiving unit 24, an external recognition sensor 25, an in-vehicle sensor 26, a vehicle sensor 27, a recording unit 28, a driving support/automated driving control unit 29, a DMS (Driver Monitoring System) 30, an HMI (Human Machine Interface) 31, and a vehicle control unit 32.
The processor 21, the communicating unit 22, the map information accumulating unit 23, the GNSS receiving unit 24, the external recognition sensor 25, the in-vehicle sensor 26, the vehicle sensor 27, the recording unit 28, the driving support/automated driving control unit 29, the driver monitoring system (DMS) 30, the human machine interface (HMI) 31, and the vehicle control unit 32 are connected to one another via a communication network 41. The communication network 41 includes a vehicle-mounted network, for example, a CAN (Controller Area Network), a LIN (Local Interconnect Network), a LAN (Local Area Network), FlexRay (registered trademark), or Ethernet (registered trademark) that conforms to any standard and a bus or the like. Alternatively, each unit of the vehicle control system 11 may be directly connected by Near Field Communication (NFC), Bluetooth (registered trademark), or the like without involving the communication network 41.

Hereinafter, when each unit of the vehicle control system 11 is to communicate via the communication network 41, a description of the communication network 41 will be omitted. For example, communications performed between the processor 21 and the communicating unit 22 via the communication network 41 will simply be referred to as communications performed between the processor 21 and the communicating unit 22.

The processor 21 includes, for example, various processors such as a CPU (Central Processing Unit), an MPU (Micro Processing Unit), or an ECU (Electronic Control Unit). The processor 21 controls the overall vehicle control system 11.

The communicating unit 22 communicates with various devices inside and outside the vehicle, other vehicles, servers, base stations, and the like, and transmits and receives various kinds of data. As communications outside the vehicle, for example, the communicating unit 22 receives, from the outside, a program for updating software that controls operations of the vehicle control system 11, map information, traffic information, and information on the surroundings of the vehicle 1. For example, the communicating unit 22 transmits, to the outside, information regarding the vehicle 1 (for example, data indicating a state of the vehicle 1 or a recognition result by a recognizing unit 73), information on the periphery of the vehicle 1, and the like. For example, the communicating unit 22 performs communications for vehicle emergency notification systems such as eCall.

A communication method for the communicating unit 22 is not particularly limited. In addition, a plurality of communication methods may be used.

As communications inside the vehicle, for example, the communicating unit 22 performs wireless communications with devices inside the vehicle using a communication method such as wireless LAN, Bluetooth (registered trademark), NFC, or WUSB (Wireless USB). For example, the communicating unit 22 performs wired communications with devices inside the vehicle according to a communication method such as USB (Universal Serial Bus), HDMI (registered trademark) (High-Definition Multimedia Interface), or MHL (Mobile High-definition Link) via a connection terminal (not illustrated) (and a cable if necessary).

In this case, a device in the vehicle is, for example, a device not connected to the communication network 41 in the vehicle. For example, the device assumed to be a mobile device or a wearable device carried by an occupant such as a driver or an information device which is carried aboard the vehicle to be temporarily installed therein.

For example, the communicating unit 22 communicates with a server or the like that is present on an external network (for example, the Internet, a cloud network, or a business-specific network) according to a wireless communication method such as 4G (4th Generation Mobile Communication System), 5G (5th Generation Mobile Communication System), LTE (Long Term Evolution), or DSRC (Dedicated Short Range Communications) via a base station or an access point.

For example, the communicating unit 22 communicates with a terminal present near one's own vehicle (for example, a terminal of a pedestrian or a store or an MTC (Machine Type Communication) terminal using P2P (Peer To Peer) technology. For example, the communicating unit 22 performs V2X communications. Examples of V2X communications include Vehicle-to-Vehicle communications with another vehicle, Vehicle-to-Infrastructure communications with a roadside apparatus or the like, Vehicle-to-Home communications with home, and Vehicle-to-Pedestrian communications with a terminal or the like owned by a pedestrian.

For example, the communicating unit 22 receives electromagnetic waves transmitted by a Vehicle Information and Communication System (VICS (registered trademark)) using a radio beacon, a light beacon, FM multiplex broadcast, and the like.

The map information accumulating unit 23 accumulates maps acquired from the outside and maps created by the vehicle 1. For example, the map information accumulating unit 23 accumulates a three-dimensional high-precision map and a global map that is less precise than the high-precision map but covers a wide area.

The high-precision map is, for example, a dynamic map, a point cloud map, or a vector map (also referred to as an ADAS (Advanced Driver Assistance System) map). A dynamic map is, for example, a map made up of four layers respectively representing dynamic information, quasi-dynamic information, quasi-static information, and static information and is provided from an external server or the like. A point cloud map is a map made up of point clouds (point group data). A vector map is a map in which information such as positions of lanes and traffic lights are associated with a point cloud map. For example, the point cloud map and the vector map may be provided from an external server or may be created in the vehicle 1 as a map to be matched with a local map (to be described later) on the basis of sensing results by a radar 52, a LiDAR 53 or the like and accumulated in the map information accumulating unit 23. In addition, when a high-precision map is provided from an external server or the like, in order to reduce communication capacity, map data of, for example, a square with several hundred meters per side regarding a planned path to be traveled by the vehicle 1 is acquired from the server or the like.

The GNSS receiving unit 24 receives a GNSS signal from a GNSS satellite and supplies the signal to the driving support/automated driving control unit 29.

The external recognition sensor 25 includes various sensors used to recognize a situation outside of the vehicle 1 and supplies each unit of the vehicle control system 11 with sensor data from each sensor. The external recognition sensor 25 may include any type of or any number of sensors.

For example, the external recognition sensor 25 includes a camera 51, the radar 52, the LiDAR (Light Detection and Ranging, Laser Imaging Detection and Ranging) 53, and an ultrasonic sensor 54. Any numbers of cameras 51, radars 52, LiDARs 53, and ultrasonic sensors 54 may be provided, and an example of a sensing area of each sensor will be described later.

As the camera 51, for example, a camera of any photographic method such as a ToF (Time of Flight) camera, a stereo camera, a monocular camera, or an infrared camera is used as necessary.

In addition, for example, the external recognition sensor 25 includes an environmental sensor for detecting weather, meteorological phenomena, brightness, and the like. For example, the environmental sensor includes a raindrop sensor, a fog sensor, a sunshine sensor, a snow sensor, and an illuminance sensor.

Furthermore, for example, the external recognition sensor 25 includes a microphone to be used to detect sound around the vehicle 1 and a position of a sound source.

The in-vehicle sensor 26 includes various sensors for detecting information inside the vehicle and supplies each unit of the vehicle control system 11 with sensor data from each sensor. The in-vehicle sensor 26 may include any type of or any number of sensors.

For example, the in-vehicle sensor 26 includes a camera, a radar, a seat sensor, a steering wheel sensor, a microphone, or a biometric sensor. As the camera, for example, a camera of any photographic method such as a ToF camera, a stereo camera, a monocular camera, or an infrared camera can be used. For example, the biometric sensor is provided on a seat, the steering wheel, or the like and detects various pieces of biological information about an occupant such as the driver.

The vehicle sensor 27 includes various sensors for detecting a state of the vehicle 1 and supplies each unit of the vehicle control system 11 with sensor data from each sensor. The vehicle sensor 27 may include any type of or any number of sensors.

For example, the vehicle sensor 27 includes a velocity sensor, an acceleration sensor, an angular velocity sensor (gyroscope sensor), and an inertial measurement unit (IMU). The vehicle sensor 27 includes, for example, a steering angle sensor that detects a steering angle of the steering wheel, a yaw rate sensor, an accelerator sensor that detects an operation amount of the accelerator pedal, and a brake sensor that detects an operation amount of the brake pedal. The vehicle sensor 27 includes, for example, a rotation sensor that detects a rotational speed of an engine or a motor, an air pressure sensor that detects air pressure of a tire, a slip ratio sensor that detects a slip ratio of a tire, and a wheel speed sensor that detects a rotational speed of a wheel. For example, the vehicle sensor 27 includes a battery sensor that detects a remaining battery life and the temperature of a battery and an impact sensor that detects an impact from the outside.

For example, the recording unit 28 includes a ROM (Read Only Memory), a RAM (Random Access Memory), a magnetic storage device such as an HDD (Hard Disc Drive), a semiconductor storage device, an optical storage device, and a magnetooptical storage device. The recording unit 28 records various programs and data to be used by each unit of the vehicle control system 11. For example, the recording unit 28 records a rosbag file including messages transmitted and received in a ROS (Robot Operating System) in which an application program related to automated driving runs. For example, the recording unit 28 includes an EDR (Event Data Recorder) or a DSSAD (Data Storage System for Automated Driving) and records information on the vehicle 1 before and after an event such as an accident.

The driving support/automated driving control unit 29 controls driving support and automated driving of the vehicle 1. For example, the driving support/automated driving control unit 29 includes an analyzing unit 61, an action planning unit 62, and an operation control unit 63.

The analyzing unit 61 performs analysis on the vehicle 1 and its surroundings. The analyzing unit 61 includes a self-position estimating unit 71, a sensor fusion unit 72, and the recognizing unit 73.

The self-position estimating unit 71 estimates a self-position of the vehicle 1 on the basis of sensor data from the external recognition sensor 25 and the high-precision map accumulated in the map information accumulating unit 23. For example, the self-position estimating unit 71 estimates a self-position of the vehicle 1 by generating a local map based on sensor data from the external recognition sensor 25 and matching the local map and the high-precision map with each other. The position of the vehicle 1 is based on, for example, the center of the rear axle.

The local map is, for example, a three-dimensional high-precision map or an occupancy grid map that is created using a technique such as SLAM (Simultaneous Localization and Mapping). The three-dimensional high-precision map is, for example, the above-mentioned point cloud map. The occupancy grid map is a map indicating occupancy of an object in units of grids of a predetermined size into which a three-dimensional or two-dimensional space surrounding the vehicle 1 is divided. The occupancy of an object is represented by, for example, the presence or absence of the object or an existence probability of the object. The local map is also used in, for example, the detection and recognition of surroundings of the vehicle 1 by the recognizing unit 73.

The self-position estimating unit 71 may estimate a self-position of the vehicle 1 on the basis of an GNSS signal and sensor data from the vehicle sensor 27.

The sensor fusion unit 72 performs sensor fusion processing for obtaining new information by combining sensor data of a plurality of different types (for example, image data supplied from the camera 51 and sensor data supplied from the radar 52). Methods of combining sensor data of a plurality of different types include integration, fusion, and association.

The recognizing unit 73 performs the detection and recognition of surroundings of the vehicle 1.

For example, the recognizing unit 73 performs the detection and recognition of surroundings of the vehicle 1 on the basis of information from the external recognition sensor 25, information from the self-position estimating unit 71, information from the sensor fusion unit 72, and the like.

Specifically, the recognizing unit 73 performs, for example, the detection and recognition of an object around the vehicle 1. The detection of an object refers to, for example, processing for detecting the presence or absence, a size, a shape, a position, a motion of an object. The recognition of an object refers to, for example, processing for recognizing an attribute such as a type of an object or identifying a specific object. However, a distinction between detection and recognition is not always obvious and an overlap may occur.

For example, the recognizing unit 73 detects an object around the vehicle 1 by performing clustering in which a point cloud based on sensor data of a LiDAR or a radar or the like is classified into blocks of point groups. Accordingly, the presence or absence, a size, a shape, and a position of an object around the vehicle 1 are detected.

For example, the recognizing unit 73 detects a motion of an object around the vehicle 1 by tracking a motion of a block of point groups having been classified by clustering. Accordingly, a velocity and a travel direction (a movement vector) of the object around the vehicle 1 are detected.

For example, the recognizing unit 73 recognizes a type of an object around the vehicle 1 by performing object recognition such as semantic segmentation on image data supplied from the camera 51.

An object to be detected or recognized is assumed to be, for example, a vehicle, a person, a bicycle, an obstacle, a structure, a road, a traffic light, a traffic sign, or a road sign.

For example, the recognizing unit 73 performs the recognition of traffic rules around the vehicle 1 on the basis of maps accumulated in the map information accumulating unit 23, the estimation result of a self-position, and the recognition result of an object around the vehicle 1. This processing can recognize, for example, a position and a state of traffic lights, the contents of traffic signs and road signs, the contents of road traffic regulations, and travelable lanes or the like.

For example, the recognizing unit 73 performs the recognition of an environment around the vehicle 1. A surrounding environment to be recognized is assumed to be, for example, a weather, an air temperature, a humidity, a brightness, and road surface conditions or the like.

The action planning unit 62 creates an action plan of the vehicle 1. For example, the action planning unit 62 creates an action plan by performing the processing of path planning and path following.

Path planning (global path planning) refers to the process of planning a general path from the start to the finish. The path planning is referred to as trajectory planning and includes the process of trajectory generation (local path planning), which enables safe and smooth traveling, in the vicinity of the vehicle 1 in consideration of the motion characteristics of the vehicle 1 along the path planned by global path planning.

Path following refers to the process of planning an operation for safely and accurately traveling on the path planned by global path planning within a planned time. For example, a target velocity and a target angular velocity of the vehicle 1 are calculated.

The operation control unit 63 controls operations of the vehicle 1 in order to realize the action plan created by the action planning unit 62.

For example, the operation control unit 63 controls a steering control unit 81, a brake control unit 82, and a drive control unit 83 to perform acceleration/deceleration control and directional control so that the vehicle 1 travels along a trajectory calculated by trajectory planning. For example, the operation control unit 63 performs cooperative control in order to implement ADAS functions such as collision avoidance or shock mitigation, car-following driving, constant-speed driving, a collision warning of own vehicle, and a lane deviation warning of one's own vehicle. For example, the operation control unit 63 performs cooperative control aimed at autonomous driving or the like in which a vehicle autonomously travels irrespective of manipulations by a driver.

The DMS 30 performs, for example, authentication on a driver and the recognition of a state of the driver on the basis of sensor data from the in-vehicle sensor 26, input data to be inputted to the HMI 31, and the like. A driver's state to be recognized is assumed to be, for example, a physical condition, a level of arousal, a level of concentration, a level of fatigue, an eye gaze direction, a level of intoxication, a driving operation, or a posture.

Alternatively, the DMS 30 may perform authentication on an occupant other than the driver and the recognition of a state of the occupant. In addition, for example, the DMS 30 may perform the recognition of a situation inside the vehicle on the basis of sensor data from the in-vehicle sensor 26. A situation to be recognized inside the vehicle is assumed to be, for example, a temperature, a humidity, a brightness, or an odor.

The HMI 31 is used to input various kinds of data and instructions and generates an input signal based on input data, an input instruction, or the like and supplies the input signal to each unit of the vehicle control system 11. For example, the HMI 31 includes an operation device such as a touch panel, a button, a microphone, a switch, or a lever, an operation device where an input is enabled by methods such as voice or gestures other than manual operations. For example, the HMI 31 may be a remote-controlled device using infrared light or other radio waves, a mobile device corresponding to operations of the vehicle control system 11, an externally-connected device such as a wearable device.

In addition, the HMI 31 generates and outputs visual information, audio information, and tactile information about an occupant or the outside of the vehicle and performs output control for controlling output contents, output timings, output methods, and the like. Visual information is, for example, information represented by images and light of an operating screen, a state display of the vehicle 1, a warning display, and a monitor image indicating surroundings of the vehicle 1. Audio information is, for example, information represented by sound such as a guidance, a warning sound, or a warning message. Tactile information is, for example, information tactually presented to an occupant with a force, vibrations, a motion, or the like.

A device for outputting visual information is assumed to be, for example, a display apparatus, a projector, a navigation apparatus, an instrument panel, a CMS (Camera Monitoring System), an electronic mirror, or a lamp. In addition to an apparatus having a normal display, the display apparatus may be an apparatus for displaying visual information in a field of view of an occupant, for example, a head-up display, a light-transmitting display, or a wearable device equipped with an AR (Augmented Reality) function.

A device for outputting audio information is assumed to be, for example, an audio speaker, headphones, or earphones.

A device for outputting tactile information is assumed to be, for example, a haptic element or the like using haptic technology. For example, the haptic element is provided inside a steering wheel or a seat.

The vehicle control unit 32 controls each unit of the vehicle 1. The vehicle control unit 32 includes the steering control unit 81, the brake control unit 82, the drive control unit 83, a body system control unit 84, a light control unit 85, and a horn control unit 86.

The steering control unit 81 performs detection, control, and the like on a state of the steering system of the vehicle 1. The steering system includes, for example, a steering mechanism provided with the steering wheel and electronic power steering. For example, the steering control unit 81 includes a control unit such as an ECU for controlling the steering system and an actuator for driving the steering system.

The brake control unit 82 performs detection, control, and the like on a state of the brake system of the vehicle 1. For example, the brake system includes a brake mechanism provided with a brake pedal and an ABS (Antilock Brake System). For example, the brake control unit 82 includes a control unit such as an ECU for controlling the brake system and an actuator for driving the brake system.

The drive control unit 83 performs detection, control, and the like on a state of the drive system of the vehicle 1. For example, the drive system includes an accelerator pedal, a drive force generating apparatus for generating a drive force, e.g., an internal-combustion engine or a drive motor, and a drive force transmission mechanism for transmitting the drive force to the wheels. For example, the drive control unit 83 includes a control unit such as an ECU for controlling the drive system, and an actuator for driving the drive system.

The body system control unit 84 performs detection, control, and the like on a state of the body system of the vehicle 1. For example, the body system includes a keyless entry system, a smart key system, a power window apparatus, a power seat, an air conditioner, an airbag, a seatbelt, and a shift lever. For example, the body system control unit 84 includes a control unit such as an ECU for controlling the body system, and an actuator for driving the body system.

The light control unit 85 performs detection, control, and the like on a state of various lights of the vehicle 1. Lights to be controlled are assumed to be, for example, a headlamp, a tail lamp, a fog lamp, a turn signal, a brake lamp, a projector lamp, and a bumper display. The light control unit 85 includes a control unit such as an ECU for controlling the lights, and an actuator for driving the lights.

The horn control unit 86 performs detection, control, and the like on a state of the car horn of the vehicle 1. For example, the horn control unit 86 includes a control unit such as an ECU for controlling the car horn, and an actuator for driving the car horn.

Fig. 2 is a diagram illustrating an example of sensing areas by the camera 51, the radar 52, the LiDAR 53, and the ultrasonic sensor 54 of the external recognition sensor 25 illustrated in Fig. 1.

A sensing area 101F and a sensing area 101B represent an example of sensing areas of the ultrasonic sensor 54. The sensing area 101F covers the periphery of the front end of the vehicle 1. The sensing area 101B covers the periphery of the rear end of the vehicle 1.

Sensing results in the sensing area 10 1F and the sensing area 101B are used for, for example, the parking assistance of the vehicle 1.

A sensing area 102F or a sensing area 102B represents an example of sensing areas of the radar 52 for short or intermediate distances. The sensing area 102F covers up to a position farther than the sensing area 101F ahead of the vehicle 1. The sensing area 102B covers up to a position farther than the sensing area 101B behind the vehicle 1. A sensing area 102L covers the periphery of the rear left side of the vehicle 1. A sensing area 102R covers the periphery of the rear right side of the vehicle 1.

A sensing result in the sensing area 102F is used to detect, for example, a vehicle or a pedestrian ahead of the vehicle 1. A sensing result in the sensing area 102B is used for, for example, the function of preventing a collision at the rear of the vehicle 1. Sensing results in the sensing area 102L and the sensing area 102R are used to detect, for example, an object in a blind spot on the sides of the vehicle 1.

A sensing area 103F or a sensing area 103B represents an example of sensing areas by the camera 51. The sensing area 103F covers up to a position farther than the sensing area 102F ahead of the vehicle 1. The sensing area 103B covers up to a position farther than the sensing area 102B behind the vehicle 1. A sensing area 103L covers a periphery of the left side of the vehicle 1. A sensing area 103R covers a periphery of the right side of the vehicle 1.

A sensing result in the sensing area 103F is used for, for example, the recognition of a traffic light or a traffic sign and a lane deviation prevention support system. A sensing result in the sensing area 103B is used for, for example, parking assistance and a surround view system. Sensing results in the sensing area 103L and the sensing area 103R are used for, for example, a surround view system.

A sensing area 104 represents an example of a sensing area of the LiDAR 53. The sensing area 104 covers up to a position farther than the sensing area 103F ahead of the vehicle 1. The sensing area 104 has a narrower range than the sensing area 103F in a lateral direction.

A sensing result in the sensing area 104 is used for, for example, emergency braking, collision avoidance, and pedestrian detection.

A sensing area 105 represents an example of a sensing area of the radar 52 for long distances. The sensing area 105 covers up to a position farther than the sensing area 104 ahead of the vehicle 1. The sensing area 105 has a narrower range than the sensing area 104 in the lateral direction.

A sensing result in the sensing area 105 is used for, for example, ACC (Adaptive Cruise Control).

The sensing areas of the sensors may have various configurations other than those in Fig. 2. Specifically, the ultrasonic sensor 54 may be configured to also sense the sides of the vehicle 1 or the LiDAR 53 may be configured to sense the rear of the vehicle 1.

<2. Problem of conventional tracking>

A technique of tracking a vehicle traveling around one's own vehicle in driving support with an onboard camera or automated driving is known in recent years.

In tracking of a traveling vehicle, a vehicle to be tracked is hard to follow as the same vehicle on the time base. Thus, in some cases, a vehicle other than a vehicle to be tracked is tracked by mistake. This is also called ID switching in tracking.

In tracking, whether a recognized vehicle is identical to a vehicle to be tracked is determined on the basis of a position estimation result in a camera coordinate system or a three-dimensional coordinate system of the recognized vehicle. However, ID switching occurs because a vehicle is not always recognized with accuracy and an estimated vehicle position includes an error.

A configuration for suppressing ID switching and improving tracking performance will be described below.

<3. Configuration example of information processing device>

Fig. 3 is a block diagram illustrating a configuration example of an information processing device to which the present technique is applied.

Fig. 3 illustrates a camera 210 and an information processing device 230.

The information processing device 230 is configured as an example of a driving support device with an onboard camera. The information processing device 230 is installed in the vehicle 1 and recognizes and tracks an object around the vehicle 1 in a camera image, which is a moving image captured by the camera 210. The camera 210 corresponds to the camera 51 in Fig. 1 and is configured as a monocular camera that captures images ahead of and behind the vehicle 1.

Additionally, the camera 210 may be configured as, for example, a 360-degree camera that is mounted on the roof (outside the ceiling) of the vehicle 1 and captures images around the vehicle 1.

The information processing device 230 corresponds to, for example, the analyzing unit 61 in Fig. 1 and includes a signal processing unit 231, a vehicle recognizing unit 232, a distance/velocity computing unit 233, a rectangular region clipping unit 234, a feature information extracting unit 235, and a tracking unit 236.

The signal processing unit 231 performs various kinds of signal processing on frame images constituting a camera image (RAW data) captured by the camera 210 and supplies the frame images to the vehicle recognizing unit 232 and the rectangular region clipping unit 234.

The vehicle recognizing unit 232 performs object recognition on the frame images from the signal processing unit 231, thereby recognizing an object around the vehicle 1, specifically, a vehicle traveling around the vehicle 1. The number of vehicles recognized in one frame image is not limited to one, and two or more vehicles may be recognized. Coordinate information about the position and size of a rectangular frame surrounding a recognized vehicle is supplied to the distance/velocity computing unit 233 and the rectangular region clipping unit 234.

The distance/velocity computing unit 233 computes a distance between the recognized vehicle and one's own vehicle (vehicle 1) and the relative velocity of the recognized vehicle on the basis of the coordinate information from the vehicle recognizing unit 232. For example, the distance/velocity computing unit 233 determines a distance from the recognized vehicle on the basis of the sensing results of the radar 52 and the LiDAR 53 and computes the relative velocity of the recognized vehicle by using the distance and the coordinate information.

Distance information and velocity information that are obtained by the computation are added to the coordinate information and is supplied to the tracking unit 236.

The rectangular region clipping unit 234 clips a rectangular region (recognized vehicle) in a rectangular frame indicated by the coordinate information from the vehicle recognizing unit 232, from each frame image from the signal processing unit 231. A vehicle image, which is an image of the clipped rectangular region, is supplied to the feature information extracting unit 235.

The feature information extracting unit 235 extracts, for each frame image, vehicle feature information in the vehicle image from the rectangular region clipping unit 234. Specifically, the feature information extracting unit 235 extracts the vehicle feature information based on sensor data obtained by one or more sensors. The sensor data includes at least one of a frame image captured by the camera 210 and point group data obtained by the radar 52 or the LiDAR 53. The extracted feature information is supplied to the tracking unit 236.

On the basis of the coordinate information from the distance/velocity computing unit 233, the tracking unit 236 estimates, for each frame image, the position of a vehicle to be tracked, thereby tracking the vehicle in camera images (chronologically captured frame images).

At this point, the tracking unit 236 tracks a vehicle in camera images by using the feature information from the feature information extracting unit 235. In other words, the tracking unit 236 tracks a vehicle on the basis of a comparison result between feature information in a frame image at the current time (current frame) and feature information in a frame image (previous frame) at a time before (preceding) the current frame.

Specifically, the tracking unit 236 determines that a vehicle in the current frame is identical to a vehicle in the previous frame when there is a match between the feature information of the current frame and the feature information of the previous frame, so that the vehicle is tracked.

For example, in a comparison of feature information between the current frame and the previous frame, if a score indicating the degree of match is equal to or larger than a predetermined threshold value, it is determined that there is a match in the feature information between the current frame and the previous frame. More specifically, pieces of feature information are extracted from a vehicle image of each frame image. If the total score of the pieces of feature information is equal to or larger than the predetermined threshold value, it is determined that there is a match in the feature information between the current frame and the previous frame.

Fig. 4 indicates an example of scored feature information.

In the example of Fig. 4, the number of a number plate of a vehicle, the position of the number plate, and the position of a radar detection point in a vehicle image are extracted as feature information. The number and position of the number plate are extracted by recognizing the number plate as a vehicle characteristic region (feature region) in a vehicle image clipped from a camera image serving as a piece of sensor data. The position of the radar detection point is extracted from point group data reflected on the vehicle, from among point group data obtained as a piece of sensor data by the radar 52.

In each item of feature information, a score corresponding to a match between the current frame and the previous frame is set in advance. In the example of Fig. 4, the score is 5 when there is a match in the number of the number plate between the current frame and the previous frame, and the score is 1 when there is a match in the position of the number plate between the current frame and the previous frame. As the score of the position of the radar detection point, a value is obtained by multiplying the ratio of matches between the current frame and the previous frame by 5.

Thereafter, the total score of the feature information and 5, a threshold value, are compared with each other. If the total score of the feature information is 5 or more, it is determined that there is a match in the feature information between the current frame and the previous frame and vehicles in the vehicle images of the current frame and the previous frame are identical to each other.

Fig. 5 illustrates an example of identification of a vehicle.

In the example of Fig. 5, a vehicle recognized in a frame image at time t-1 is tracked by a rectangular frame 251 (hereinafter referred to as, for example, a bounding box 251) surrounding the vehicle. In the bounding box 251, a number plate N251 is recognized as a feature region of the vehicle, and a plurality of (specifically, seven) radar detection points D251 are acquired as point group data. In the bounding box 251, the position of the number plate and the positions of the radar detection points are represented as the coordinates of a p-q coordinate system that is set with the origin point at the lower left vertex of the bounding box 251 on the basis of a camera coordinate system.

It is assumed that two vehicles are recognized by bounding boxes 261 and 262 in a frame image at subsequent time t and are inputted as input data to be identified. In this case, it is assumed that the vehicle in the bounding box 261 is the vehicle in the bounding box 251 at time t-1 and the vehicle in the bounding box 262 is different from the vehicle in the bounding box 251 at time t-1.

When comparing feature information between the bounding box 261 and the bounding box 251, the number of the number plate is "18-66" in both of the bounding boxes and thus 5 is assigned as a score. Since the positions (coordinates) of the number plates in the bounding boxes match, 1 is assigned as a score. Moreover, five (hollow circles) of seven positions of the radar detection points in the bounding box 261 match those of the bounding box 251, so that $(5/7) \times 5 = 3.57$ is assigned as a score. In this case, the total score is 9.57, which is larger than the threshold value of 5. Thus, it is determined that the vehicle in the bounding box 261 is identical to the vehicle in the bounding box 251 at time t-1.

When comparing feature information between the bounding box 262 and the bounding box 251, the numbers of the number plates are "84-54" and "18-66" and thus no score is assigned to the mismatch. Since the positions (coordinates) of the number plates in the bounding boxes do not match, no score is assigned. Moreover, three (hollow circles) of seven positions of the radar detection points in the bounding box 262 match those of the bounding box 251, so that $(3/7) \times 5 = 2.14$ is assigned as a score. In this case, the total score is 2.14, which is smaller than the threshold value of 5. Thus, it is determined that the vehicle in the bounding box 262 is not identical to the vehicle in the bounding box 251 at time t-1.

By using the feature information in the current frame and the previous frame thus, vehicles are correctly identified.

It is generally known that radio waves emitted from a radar are more likely to be reflected and detected on a curved object having a spherical surface or the like than an object having a flat surface. For example, a vehicle having a round design reflects more radio waves from a radar than a vehicle having an angular design. In other words, when radio waves are emitted to a vehicle by a radar, the reflection positions vary among vehicle types, and thus the positions of radar detection points can be used to identify vehicles. Moreover, the positions of radar detection points also depend upon the positional relationship (an angle or a distance) between one's own vehicle and a vehicle to be tracked, so that the positions of radar detection points are useful in the identification of vehicles of the same type.

For example, in the case of a camera image with a frame rate of about 15 fps, the positions of radar detection points are substantially unchanged in the frame image at time t-1 and the frame image at time t. However, if the intensity of reflection of radio waves emitted by a radar changes around a detection threshold value, the positions of radar detection points at time t-1 may be changed or undetected at time t as in the foregoing example.

Fig. 6 illustrates another example of identification of a vehicle.

In the example of Fig. 6, a vehicle recognized in a frame image at time t-1 is tracked by a bounding box 271 surrounding the vehicle. In the bounding box 271, a number plate N271 is recognized as a feature region of the vehicle, and a plurality of (specifically, five) radar detection points D271 are acquired as point group data.

It is assumed that two vehicles are recognized by bounding boxes 281 and 282 in a frame image at subsequent time t and are inputted as input data to be identified. In this case, it is assumed that the vehicle in the bounding box 281 is the vehicle in the bounding box 271 at time t-1 and the vehicle in the bounding box 282 is different from the vehicle in the bounding box 271 at time t-1.

It is assumed that a subject in a frame image at time t is unclear because one's own vehicle and a vehicle near one's own vehicle pass through a dark location, e.g., a tunnel.

When comparing feature information between the bounding box 281 and the bounding box 271, the images are unclear and thus the numbers of the number plates do not match, so that no score is assigned. Since the positions (coordinates) of the number plates in the bounding boxes match, 1 is assigned as a score. Moreover, four (hollow circles) of five positions of the radar detection points in the bounding box 281 match those of the bounding box 271, so that $(4/5) \times 5 = 4$ is assigned as a score. In this case, the total score is 5, which is equal to or larger than the threshold value of 5. Thus, it is determined that the vehicle in the bounding box 281 is identical to the vehicle in the bounding box 271 at time t-1.

Also when comparing feature information between the bounding box 282 and the bounding box 271, the images are unclear and thus the numbers of the number plates do not match, so that no score is assigned. Since the positions (coordinates) of the number plates in the bounding boxes do not match, no score is assigned. Moreover, two (hollow circles) of five positions of the radar detection points in the bounding box 282 match those of the bounding box 271, so that $(2/5) \times 5 = 2$ is assigned as a score. The total score is 2, which is smaller than the threshold value of 5. Thus, it is determined that the vehicle in the bounding box 282 is not identical to the vehicle in the bounding box 271 at time t-1.

In this way, even under poor imaging conditions in dark locations such as a tunnel, vehicles are correctly identified by using the feature information in the current frame and the previous frame.

(Another example of feature information)

In the foregoing description, the number of a number plate, the position of the number plate, and the positions of radar detection points in a vehicle image are extracted as feature information. Other kinds of feature information may be extracted instead.

Fig. 7 illustrates an example of feature regions.

In the example of Fig. 7, in a bounding box 291 including a recognized vehicle, a front grille G291, a right front light R291, a left front light L291, and an emblem E291 are recognized as the feature regions of the vehicle.

In this case, the position (p2,q2) of the front grille G291, the position (p3,q3) of the right front light R291, the position (p4,q4) of the left front light L291, and the position (p5,q5) of the emblem E291 are extracted as feature information in a p-q coordinate system set with respect to the bounding box 291. In the example of Fig. 7, the position of the feature region in the p-q coordinate system is represented by the coordinates of the lower left vertex of a rectangular frame indicating the feature region. The position of the feature region may be represented by the coordinates of other points of the rectangular frame.

Furthermore, the sizes and shapes of the feature regions may be extracted as feature information on the basis of the widths and heights of rectangular frames representing the front grille G291, the right front light R291, the left front light L291, and the emblem E291 that are recognized as feature regions.

In the example of Fig. 7, parts at the front of the vehicle are recognized as a feature region. Parts at the rear of the vehicle may be recognized as a feature region.

Fig. 8 illustrates an example of point group data.

In the example of Fig. 8, in the bounding box 291 including a recognized vehicle, pieces of LiDAR point group data D291 are acquired as point group data.

In this case, the positions of the LiDAR point group data D291 are extracted as feature information in the p-q coordinate system that is set with respect to the bounding box 291, and the ratio of matches between the current frame and the previous frame is determined.

Additionally, the LiDAR point group data D291 includes position information in a three-dimensional coordinate system. Thus, the three-dimensional coordinates of the LiDAR point group data D291 may be extracted as feature information to determine the ratio of matches between the current frame and the previous frame. In this case, a position in the depth (distance) direction changes in each frame image. Thus, coordinates in the current frame are used for comparison. The coordinates in the current frame are predicted by adding, to three-dimensional coordinates in the previous frame, a distance determined by multiplying, by the time of one frame, the velocity of a vehicle to be tracked.

Furthermore, the intensity of reflection of each piece of the LiDAR point group data D291 may be extracted as feature information to determine the ratio of matches between the current frame and the previous frame.

The feature information can be used in combination depending on, for example, the sensors installed in the vehicle 1. Moreover, the extraction of the feature information is a computation performed only in a bounding box including a recognized vehicle, so that the extraction can suppress an amount of computation as compared with a computation on the overall image and is suitable for real-time processing.

<4. Flow of vehicle tracking>

Referring to the flowchart of Fig. 9, a flow of vehicle tracking by the information processing device 230 will be described below. The processing of Fig. 9 is repeated for each frame image constituting a camera image.

In step S11, the signal processing unit 231 performs various kinds of signal processing on the frame images of a camera image captured by the camera 210.

In step S12, the vehicle recognizing unit 232 performs object recognition on frame images having been subjected to signal processing, thereby recognizing a vehicle traveling around the vehicle 1 and acquiring coordinate information about each recognized vehicle. In this case, object recognition based on sensor fusion processing may be performed in addition to object recognition on frame images.

In step S13, the distance/velocity computing unit 233 computes a distance from the recognized vehicle and the relative velocity of the recognized vehicle on the basis of the coordinate information about the recognized vehicle. Distance information and velocity information that are obtained by the computation are added to the coordinate information.

In step S14, the rectangular region clipping unit 234 clips a rectangular region based on the coordinate information about the recognized vehicle, from the frame image having been subjected to the signal processing, thereby obtaining the vehicle image.

In step S15, the feature information extracting unit 235 extracts vehicle feature information from the vehicle image clipped from the frame image.

In step S16, the tracking unit 236 tracks the vehicle in the camera image including frame images, by using the coordinate information including the added distance information and velocity information and the feature information extracted from the vehicle image.

(Data flow in vehicle tracking)

Referring to Fig. 10, a data flow in the vehicle tracking of Fig. 9 will be described below. Processes P12 to P16 in Fig. 10 correspond to steps S12 to S16 in the flowchart of Fig. 9 and are supposed to be performed on a frame image at time t.

The process P12 is vehicle recognition performed on a frame image at time t by the vehicle recognizing unit 232. By the process P12, coordinate information including a bounding box ID (hereinafter referred to as a BBox ID) and BBox coordinates is acquired.

The BBox ID is an ID specific to the bounding box of each vehicle recognized in a frame image. The BBox ID is allocated to each bounding box in each frame image at each time. The BBox coordinates represent the position (coordinates), the width, and the height of a bounding box in a u-v coordinate system set with the origin point at the lower left vertex of a frame image.

For example, as illustrated in Fig. 11, two vehicles are recognized and corresponding bounding boxes 311 and 312 are set in a frame image at a certain time. In this case, the position of the bounding box 311 is represented by the coordinates (u1,v1) of the lower left vertex of the bounding box 311, and the width and height of the bounding box 311 are represented by a horizontal length w and a vertical length h of the bounding box 311.

Thus, coordinate information about the bounding box 311 is represented as, for example, "BBox ID: B1, BBox coordinates: (u1,v1,w,h)."

The process P13 is a computation performed on a distance and a relative velocity of a vehicle recognized in a frame image at time t by the distance/velocity computing unit 233. By the process P13, coordinate information including added distance information and velocity information is acquired. The distance information represents the position (coordinates) of a vehicle in a x-y coordinate system with the origin point at one's own vehicle, the x-axis in the horizontal direction, and the y-axis in the depth direction, and the velocity information represents a relative velocity of the vehicle with respect to one's own vehicle. In the example of Fig. 10, distance information about a distance: (x1,y1) and velocity information about a relative velocity: v1 are added to coordinate information about BBox ID: B1.

Referring to Figs. 12 and 13, an example of a computation of a relative velocity will be described below.

In this example, as illustrated in Fig. 12, a relative velocity v of a vehicle 331 is estimated with respect to one's own vehicle (vehicle 1). The relative velocity of the vehicle 331 is a velocity v (m/s) at which the vehicle 331 approaches the vehicle 1 from the position of the vehicle 331 at time t-1 which is Δt seconds before time t to a location at a distance dm from the vehicle 331 at time t.

In this example, s1 is an appearance size of the vehicle 331 in a camera image at time t-1, and s2 is an appearance size of the vehicle 331 in a camera image at time t. When a change rate of an appearance size is defined as S = s2/s1, the computational expression of a relative velocity v is represented as follows:

$$v = d \times (S - 1)/\Delta t \ (m/s)$$

The change rate S of an appearance size can be determined as a change rate of the size of a bounding box set in a camera image.

Referring to Fig. 13, the derivation of the computational expression of the relative velocity v will be described below. In Fig. 13, H(m) is an actual height of the vehicle 331, a(m) is a distance from the camera 210 to a plane of projection of a frame image, θ1 is a viewing angle of the bounding box at time t-1, and θ2 is a viewing angle of the bounding box at time t.

The appearance size s1 of the vehicle 331 in a camera image (frame image) at time t-1 is expressed as below:

$$s1 = a \times \tan\theta 1$$

The appearance size s2 in a camera image (frame image) at time t is expressed as below:

$$s2 = a \times \tan\theta 2$$

Thus, the change rate S of the appearance size is expressed as below:

$$S = s2/s1 = (a \times \tan\theta2)/(a \times \tan\theta1) = \tan\theta2/\tan\theta1$$

In this case, the actual height H of the vehicle 331 has the relationship established as below:

$$H = d \times \tan\theta2 = (d + v \times \Delta t) \times \tan\theta1$$

Thus, by modifying the second term and the third term, the following relationship is obtained:

$$S = \tan\theta2/\tan\theta1 = (d + v \times \Delta t)/d$$

By solving the expression for v, the following relationship is obtained:

$$v = d \times (S - 1)/\Delta t$$

The relative velocity v of the vehicle 331 is estimated thus. The relative velocity may be determined by computing methods other than the foregoing computing method.

Referring to the description of Fig. 10 again, the process P14 is clipping of a rectangular region (bounding box) based on the coordinate information about the vehicle recognized in the frame image at time t, the rectangular region being clipped by the rectangular region clipping unit 234. By the process P14, a vehicle image is acquired for each BBox ID.

The process P15 is the extraction of feature information about the vehicle from each vehicle image at time t, the feature information being extracted by the feature information extracting unit 235. By the process P15, feature information is acquired for each BBox ID. In the example of Fig. 10, from a vehicle image of BBox ID: B1, at least the number of the number plate: N1 and the position of the number plate: (p1,q1) are extracted as feature information.

In the process P15, the number of the number plate is a number recognized in the number plate serving as a feature region, and the number is extracted as feature information. If any numbers are not recognized, for example, a value "-1" is outputted.

The process P16 is tracking performed on a vehicle in a frame image at time t by the tracking unit 236. By the process P16, tracking results including tracking IDs, BBox coordinates, bird's-eye view coordinates, and feature information are outputted.

A tracking ID is an ID specific to a vehicle to be tracked (tracking object) in a camera image (each frame image). The tracking ID is transferred to a tracking object judged to be identical between frame images at each time. The bird's-eye view coordinates represent the position (coordinates) of a vehicle in the same x-y coordinate system as the distance information.

Fig. 14 illustrates an example of the bird's-eye view coordinates.

Fig. 14 illustrates a bird's-eye view in which two vehicles 351 and 352 are tracked in a camera image of the rear of one's own vehicle (vehicle 1).

The vehicle 351 traveling in the same direction as the vehicle 1 is assigned with an ID1 as a tracking ID. The position of the vehicle 351 is represented as coordinates (x1,y1) with respect to the vehicle 1. The vehicle 352 traveling opposite to the vehicle 1 is assigned with an ID2 as a tracking ID. The position of the vehicle 352 is represented as coordinates (x2,y2) with respect to the vehicle 1.

In this way, the tracking outputs the coordinates of each vehicle in the bird's-eye view with respect to one's own vehicle.

(Detail of tracking)

Referring to Fig. 15, the process P16 (tracking) in Fig. 10 will be specifically described below. As illustrated in Fig. 15, in the process P16, four processed P31 to P34 are mainly performed. These processes are also performed on a frame image at time t.

In the example of Fig. 15, a vehicle is identified by using only the number of a number plate as feature information. Also when other kinds of feature information are used, a vehicle is basically identified in the same manner.

The process P31 is integration for integrating coordinate information, which includes added distance information and velocity information, and feature information for each vehicle recognized in a frame image at time t. The coordinate information and the feature information are integrated on the basis of a BBox ID. By the process P31, observed values at time t are acquired, the observed values including a BBox ID, BBox coordinates, a distance, a velocity, and feature information (the number of a number plate).

In the example of Fig. 15, observed values including "BBox ID: B1(t), BBox coordinates: (u1,v1,w,h)(t), a distance: (x1,y1)(t), a velocity: v1(t), a number: N1(t)" are acquired.

The process P32 is matching between observed values at time t and feature information about a tracking object at time t-1. In the process P32, matching is performed on feature information scored as described with reference to Figs. 4 to 6. The tracking object at time t-1 includes the tracking result of a vehicle tracked until time t-1. In the example of Fig. 15, feature information about a tracking object including "a tracking ID: ID1(t-1), BBox coordinates: (u1,v1)(t-1), a distance: (x1,y1)(t-1), a velocity: v1(t-1), a number: N1(t-1)" is compared with the feature information (the number of a number plate) about the observed values at time t. By the process P32, the observed values at time t and the tracking object at time t-1 are each allocated to one of a feature information match list, a mismatch list of the tracking object at time t-1, and a mismatch list of the observed values at time t.

The process P33 is association analysis that associates the observed values at time t with the tracking object at time t-1 on the basis of the allocation lists in the matching.

For example, a tracking object with a tracking ID: ID1(t-1) and observed values with a BBox ID: B1(t) are paired with an established association such that a number N1(t-1) and a number N1(t) are equal to each other and are not "-1" in the feature information match list.

A tracking object at time t-1 in the mismatch list and observed values at time t are paired by association analysis with an association based on a distance between the tracking object and the observed values. In the example of Fig. 15, a tracking object with a tracking ID: ID2(t-1) and observed values with a BBox ID: B4(t) are paired with each other.

The process P34 is a process for estimating the position of a vehicle at time t by a Kalman filter using a tracking object at time t-1 and observed values at time t in a pair. In the process P34, for example, the position of a vehicle at time t is estimated by using a vehicle existence probability predicted on the basis of a tracking object at time t-1 and a vehicle existence probability predicted on the basis of observed values at time t. By the process P34, a tracking object at time t is outputted as a tracking result.

At this point, if the observed values at time t are allocated to the feature information match list, a number N1'(t) included in the tracking object at time t is updated to the observed value, whereas if the observed values at time t are allocated to the mismatch list, the value of the tracking object in the pair at time t-1 is kept.

As described above, observed values at a first time and feature information in a tracking object at a second time prior to the first time are repeatedly compared with each other, so that tracking is performed.

According to the above processing, vehicle identification is made between frame images by using feature information on a recognized vehicle. This can suppress ID switching during tracking, thereby improving tracking performance. The extraction of the feature information, in particular, is a computation performed only in a bounding box including a recognized vehicle, so that the extraction can suppress an amount of computation as compared with a computation on the overall image and is suitable for real-time processing.

<5. Example of installation of multiple onboard cameras>

In the foregoing example, a vehicle is tracked by a single onboard camera installed in the vehicle 1. The configuration is not limited thereto. Multiple onboard cameras with different angles of view can be installed in different imaging directions in the vehicle 1, and a vehicle can be tracked by each of the onboard cameras.

A configuration for integrating the vehicle tracking results of multiple onboard cameras will be described below. In the following example, five onboard cameras are installed. The number of onboard cameras is not limited thereto.

Fig. 16 illustrates an example of the imaging ranges of multiple onboard cameras installed in the vehicle 1.

An imaging range 401 indicates the imaging range of a wide angle camera that captures an image ahead of the vehicle 1, and an imaging range 402 indicates the imaging range of a narrow angle camera that captures an image ahead of the vehicle 1. The imaging range 401 covers a wider range than the imaging range 402 ahead of the vehicle 1, whereas the imaging range 402 covers a farther range than the imaging range 401 ahead of the vehicle 1. Camera images captured by the imaging ranges 401 and 402 are used for tracking a vehicle ahead of the vehicle 1.

An imaging range 403 indicates the imaging range of a left camera that captures an image on the left side of the vehicle 1, whereas an imaging range 404 indicates the imaging range of a right camera that captures an image on the right side of the vehicle 1. A camera image captured by the imaging range 403 is used for tracking a vehicle on the left of the vehicle 1, and a camera image captured by the imaging range 404 is used for tracking a vehicle on the right of the vehicle 1.

An imaging range 405 indicates the imaging range of a rear camera that captures an image at the rear of the vehicle 1. A camera image of the imaging range 405 is used for tracking a vehicle behind the vehicle 1.

In the present example, from among vehicles recognized in camera images captured by the imaging ranges 401 to 405, one to be tracked is specified and tracked.

Fig. 17 is a block diagram illustrating a configuration example of an information processing device of the present example.

Fig. 17 illustrates a wide angle camera 411, a narrow angle camera 412, a left camera 413, a right camera 414, a rear camera 415, and an information processing device 430.

The wide angle camera 411 acquires a camera image of the imaging range 401 in Fig. 16 by capturing an image ahead of the vehicle 1 and supplies the camera image to the information processing device 430.

The narrow angle camera 412 acquires a camera image of the imaging range 402 in Fig. 16 by capturing an image ahead of the vehicle 1 and supplies the camera image to the information processing device 430.

The left camera 413 acquires a camera image of the imaging range 403 in Fig. 16 by capturing an image on the left of the vehicle 1 and supplies the camera image to the information processing device 430.

The right camera 414 acquires a camera image of the imaging range 404 in Fig. 16 by capturing an image on the right of the vehicle 1 and supplies the camera image to the information processing device 430.

The rear camera 415 acquires a camera image of the imaging range 405 in Fig. 16 by capturing an image behind the vehicle 1 and supplies the camera image to the information processing device 430.

The information processing device 430 includes information processing units 431-1 to 431-5 and an integrating unit 432.

The information processing units 431-1 to 431-5 have the same configuration as the information processing device 230 in Fig. 3. Specifically, the information processing units 431-1 to 431-5 track a vehicle around the vehicle 1 in camera images captured by the wide angle camera 411, the narrow angle camera 412, the left camera 413, the right camera 414, and the rear camera 415 (hereinafter also referred to as multiple onboard cameras). The tracking results of the vehicle in the camera images are outputted to the integrating unit 432.

The integrating unit 432 integrates the tracking results of the vehicle in the camera images captured by the multiple onboard cameras installed with different angles of view in different imaging directions, thereby tracking the vehicle. At this point, the integrating unit 432 integrates tracking results for each predetermined time unit.

In the tracking results of the vehicle in the multiple onboard cameras, for example, the size of a bounding box may vary among the tracking results of the same vehicle (the same tracking ID). In this case, the integrating unit 432 performs scaling or the like on the bounding box among the tracking results.

(Detail of integration)

Referring to Fig. 18, the integration of tracking results by the integrating unit 432 will be specifically described below. As illustrated in Fig. 18, three processes are mainly performed in the integration of tracking results by the integrating unit 432. In this case, the multiple onboard cameras capture camera images in an asynchronous manner but the camera images have the same frame rate (fps).

A process P41 is the process of grouping, for each predetermined time unit, the tracking results of a vehicle in each of the multiple onboard cameras. As described above, the multiple onboard cameras have the same frame rate, and thus tracking results in one frame time (1/fps) can be grouped into a time group. In the example of Fig. 18, tracking results obtained for each of the multiple onboard cameras at times t1_1, t1_2, t1_3, t1_4, and t1_5 are grouped into one time group t1.

A process P42 is the process of sorting the tracking results in one time group in the order of times. In the example of Fig. 18, the tracking results of the multiple onboard cameras are sorted in the order of times t1_2, t1_1, t1_4, t1_5, and t1_3 and are inputted to a process P43 in the order of times.

The process P43 is integration in which the tracking results sorted in one time group in the order of times are accumulated and the same processes as the processes P32 to P34 in Fig. 15 are repeated to output the tracking results as a tracking object of one time group. In the example of Fig. 18, the tracking object of the time group t1 is outputted. The tracking object outputted by the process P43 may optionally include, for example, a tracking ID, BBox coordinates, distance information or velocity information, and feature information.

As described above, a vehicle is tracked by repeatedly integrating the tracking results of the multiple onboard cameras.

According to the above processing, also in the configuration including the multiple onboard cameras, vehicle identification is made between the frame images of the respective onboard cameras by using feature information on a recognized vehicle. This can suppress ID switching during tracking, thereby improving tracking performance.

In the above description, the example of vehicle tracking was mainly illustrated. Any object other than a vehicle can be tracked.

The present technique is also applicable to tracking of an object around a moving object other than a vehicle. It is assumed that the moving object is, for example, a motorcycle, a bicycle, a personal mobility, an airplane, a ship, construction equipment, or agricultural machinery (tractor). Moreover, moving objects to which the present technique is applicable include, for example, drones and moving objects such as a robot driven (operated) without an onboard user under remote control.

The present technique is also applicable to tracking of an object in a fixed location, e.g., a monitoring system.

<6. Configuration example of computer>

The above-described series of processing can also be executed by hardware or software. When the series of processing is performed by software, a program for the software is embedded in dedicated hardware to be installed from a program recording medium to a computer or a general-purpose personal computer.

Fig. 19 is a block diagram illustrating a configuration example of computer hardware that executes the above-described series of processing using a program.

The information processing device 230 and the information processing device 430 are implemented by a computer 600 having a configuration illustrated in Fig. 19.

A CPU 601, a ROM 602, and a RAM 603 are connected to one another via a bus 604.

An input/output interface 605 is further connected to the bus 604. An input unit 606 including a keyboard and a mouse and an output unit 607 including a display and a speaker are connected to the input/output interface 605. In addition, a storage unit 608 including a hard disk and a non-volatile memory, a communicating unit 609 including a network interface, and a drive 610 that drives a removable medium 611 are connected to the input/output interface 605.

In the computer 600 configured thus, for example, the CPU 601 performs the above-described series of processes by loading a program stored in the storage unit 608 to the RAM 603 via the input/output interface 605 and the bus 604 and executing the program.

The program executed by the CPU 601 is recorded on, for example, the removable medium 611 or is provided via a wired or wireless transfer medium such as a local area network, the Internet, or a digital broadcast, and the program is installed in the storage unit 608.

The program executed by the computer 600 may be a program that performs processing chronologically in the order described in the present specification or may be a program that performs processing in parallel or at a necessary timing such as a called time.

In the present specification, a system means a set of a plurality of constituent elements (devices, modules (components), or the like) regardless of whether all the constituent elements are located in the same casing. Accordingly, a plurality of devices accommodated in separate housings and connected via a network, and one device in which a plurality of modules are accommodated in one housing are all systems.

The embodiments of the present technique are not limited to the aforementioned embodiments, and various changes can be made without departing from the gist of the present technique.

The advantageous effects described in the present specification are merely exemplary and are not limited, and other advantageous effects may be achieved.

Furthermore, the present technique can be configured as follows:

(1) An information processing device including:

a feature information extracting unit that extracts feature information about an object for each frame image;
a tracking unit that tracks the object in the frame image by using the feature information.

(2) The information processing device according to (1), wherein the feature information extracting unit only extracts the feature information corresponding to a rectangular frame surrounding the object recognized in the frame image.

(3) The information processing device according to (1) or (2), wherein the tracking unit tracks the object on the basis of the comparison result of the feature information at a first time and a second time prior to the first time.

(4) The information processing device according to (3), wherein if there is a match in the feature information between the first time and the second time, the tracking unit determines that the object in the frame image at the first time is identical to the object in the frame image at the second time.

(5) The information processing device according to (4), wherein if a score indicating the degree of match in the feature information between the first time and the second time is equal to or larger than a predetermined threshold value, the tracking unit determines that there is a match in the feature information between the first time and the second time.

(6) The information processing device according to (5), wherein the feature information extracting unit extracts a plurality of pieces of the feature information, and

if the total score of the plurality of pieces of feature information is equal to or larger than the threshold value, the tracking unit determines that there is a match in the feature information between the first time and the second time.

(7) The information processing device according to any one of (1) to (6), wherein the feature information extracting unit extracts the feature information based on sensor data obtained by one or more sensors.

(8) The information processing device according to (7), wherein the sensor data includes at least one of the frame image captured by a camera and point group data obtained by a radar or a LiDAR.

(9) The information processing device according to (8), wherein the feature information extracting unit extracts the feature information from the feature region of the object in the frame image.

(10) The information processing device according to (9), wherein the feature information includes a number included in the feature region.

(11) The information processing device according to (9), wherein the feature information includes at least one of the position and the shape of the feature region.

(12) The information processing device according to any one of (9) to (11), wherein the feature region includes at least one of the number plate, the front grille, the light, and the emblem of a vehicle.

(13) The information processing device according to (9), wherein the feature information extracting unit extracts the feature information from the point group data reflected on the object.

(14) The information processing device according to (13), wherein the feature information includes the position of the camera coordinate system of the point group data.

(15) The information processing device according to (13), wherein the feature information includes the position of the three-dimensional coordinate system of the point group data.

(16) The information processing device according to (13), wherein the feature information includes the intensity of reflection of each piece of the point group data.

(17) The information processing device according to any one of (1) to (16), further including an integrating unit that tracks the object by integrating the tracking results of the object, the tracking results being based on the respective frame images captured by a plurality of cameras with different angles of view in different imaging directions.

(18) The information processing device according to (17), wherein the integrating unit integrates the tracking results for each predetermined time unit.

(19) An information processing method causing an information processing device to: extract feature information about an object for each frame image; and track the object in the frame image by using the feature information.

(20) A program causing a computer to execute processing of:

> extracting feature information about an object for each frame image; and
> tracking the object in the frame image by using the feature information.

[Reference Signs List]

1 Vehicle
61 Analyzing unit
210 Camera
230 Information processing device
231 Signal processing unit
232 Vehicle recognizing unit
233 Distance/velocity computing unit
234 Rectangular region clipping unit
235 Feature information extracting unit
236 Tracking unit
411 Wide angle camera
412 narrow angle camera
413 Left camera
414 Right camera
415 Rear camera
430 Information processing device
431-1 to 431-5 Information processing unit
432 Integrating unit

**Claims**

1. An information processing device comprising:

   a feature information extracting unit that extracts feature information about an object for each frame image; and

a tracking unit that tracks the object in the frame image by using the feature information.

2. The information processing device according to claim 1, wherein the feature information extracting unit only extracts the feature information corresponding to a rectangular frame surrounding the object recognized in the frame image.

3. The information processing device according to claim 1, wherein the tracking unit tracks the object on a basis of a comparison result of the feature information at a first time and a second time prior to the first time.

4. The information processing device according to claim 3, wherein if there is a match in the feature information between the first time and the second time, the tracking unit determines that the object in the frame image at the first time is identical to the object in the frame image at the second time.

5. The information processing device according to claim 4, wherein if a score indicating a degree of match in the feature information between the first time and the second time is equal to or larger than a predetermined threshold value, the tracking unit determines that there is a match in the feature information between the first time and the second time.

6. The information processing device according to claim 5, wherein the feature information extracting unit extracts a plurality of pieces of the feature information, and
if a total score of the plurality of pieces of feature information is equal to or larger than the threshold value, the tracking unit determines that there is a match in the feature information between the first time and the second time.

7. The information processing device according to claim 1, wherein the feature information extracting unit extracts the feature information based on sensor data obtained by one or more sensors.

8. The information processing device according to claim 7, wherein the sensor data includes at least one of the frame image captured by a camera and point group data obtained by a radar or a LiDAR.

9. The information processing device according to claim 8, wherein the feature information extracting unit extracts the feature information from a feature region of the object in the frame image.

10. The information processing device according to claim 9, wherein the feature information includes a number included in the feature region.

11. The information processing device according to claim 5, wherein the feature information includes at least one of a position and a shape of the feature region.

12. The information processing device according to claim 9, wherein the feature region includes at least one of a number plate, a front grille, a light, and an emblem of a vehicle.

13. The information processing device according to claim 8, wherein the feature information extracting unit extracts the feature information from the point group data reflected on the object.

14. The information processing device according to claim 13, wherein the feature information includes a position of a camera coordinate system of the point group data.

15. The information processing device according to claim 13, wherein the feature information includes a position of a three-dimensional coordinate system of the point group data.

16. The information processing device according to claim 13, wherein the feature information includes intensity of reflection of each piece of the point group data.

17. The information processing device according to claim 1, further comprising an integrating unit that tracks the object by integrating tracking results of the object, the tracking results being based on the respective frame images captured by a plurality of cameras with different angles of view in different imaging directions.

18. The information processing device according to claim 17, wherein the integrating unit integrates the tracking results for each predetermined time unit.

**19.** An information processing method causing an information processing device to:

extract feature information about an object for each frame image; and
track the object in the frame image by using the feature information.

**20.** A program causing a computer to execute processing of:

extracting feature information about an object for each frame image; and
tracking the object in the frame image by using the feature information.

Fig. 1

Fig. 2

Fig. 3

Fig. 4

| FEATURE INFORMATION | SCORE FOR MATCH |
|---|---|
| NUMBER OF NUMBER PLATE | 5 |
| POSITION OF NUMBER PLATE | 1 |
| POSITION OF RADAR DETECTION POINT | (RATIO OF MATCHES) × 5 |

※ THRESHOLD VALUE FOR DETERMINING MATCH: 5

Fig. 5

EP 4 140 815 A1

VEHICLE BEING TRACKED     INPUT DATA TO BE IDENTIFIED

q

p

D251  251  N251

261

NUMBER OF NUMBER PLATE: MATCH ⇒ +5
POSITION OF NUMBER PLATE: MATCH ⇒ +1
POSITION OF RADAR DETECTION POINT:
$(5/7) \times 5 \Rightarrow +3.57$
      TOTAL 9.57(≥5)

⇒ MATCH CONFIRMED

262

NUMBER OF NUMBER PLATE: MISMATCH ⇒ ±0
POSITION OF NUMBER PLATE: MISMATCH ⇒ ±0
POSITION OF RADAR DETECTION POINT:
$(3/7) \times 5 \Rightarrow +2.14$
      TOTAL 2.14(<5)

⇒ MISMATCH CONFIRMED

Fig. 6

VEHICLE BEING TRACKED

INPUT DATA TO BE IDENTIFIED

N271 271 D271

281 282

NUMBER OF NUMBER PLATE: MISMATCH ⇒ ±0
POSITION OF NUMBER PLATE: MATCH ⇒ +1
POSITION OF RADAR DETECTION POINT: (4/5) × 5 ⇒ +4
TOTAL 5(≥5)

⇒ MATCH CONFIRMED

NUMBER OF NUMBER PLATE: MISMATCH (UNCLEAR IMAGE) ⇒ ±0
POSITION OF NUMBER PLATE: MISMATCH ⇒ ±0
POSITION OF RADAR DETECTION POINT: (2/5) × 5 ⇒ +2
TOTAL 2(<5)

⇒ MISMATCH CONFIRMED

Fig. 7

EP 4 140 815 A1

Fig. 7

Fig. 8

Fig. 9

```
                    ┌──────────┐
                    │  START   │
                    └────┬─────┘
                         │
                         ▼
        ┌────────────────────────────────────────┐
        │       PERFORM SIGNAL PROCESSING         │ S11
        └────────────────────┬───────────────────┘
                             │
                             ▼
        ┌────────────────────────────────────────┐
        │            RECOGNIZE VEHICLE            │ S12
        └────────────────────┬───────────────────┘
                             │
                             ▼
        ┌────────────────────────────────────────┐
        │        COMPUTE DISTANCE/VELOCITY        │ S13
        └────────────────────┬───────────────────┘
                             │
                             ▼
        ┌────────────────────────────────────────┐
        │          CLIP RECTANGULAR REGION        │ S14
        └────────────────────┬───────────────────┘
                             │
                             ▼
        ┌────────────────────────────────────────┐
        │        EXTRACT FEATURE INFORMATION      │ S15
        └────────────────────┬───────────────────┘
                             │
                             ▼
        ┌────────────────────────────────────────┐
        │  TRACK VEHICLE USING FEATURE INFORMATION│ S16
        └────────────────────┬───────────────────┘
                             │
                             ▼
                    ┌──────────┐
                    │   END    │
                    └──────────┘
```

Fig. 10

Fig. 11

Fig. 12

POSITION Δt SECONDS BEFORE

→ APPROACH AT v(m/s)

s1: APPEARANCE SIZE IN CAMERA IMAGE AT TIME t−1

s2: APPEARANCE SIZE IN CAMERA IMAGE AT TIME t

FOR CHANGE RATE OF APPEARANCE SIZE S = s2/s1,

RELATIVE VELOCITY v = d × (S − 1)/ Δt(m/s)

d (m)

s1
s2

331
TIME t−1

331
TIME t

1

Fig. 13

Fig. 14

Fig. 15

EP 4 140 815 A1

TRACKING OBJECT AT TIME t-1

Tracking ID:ID1(t-1)
BBox COORDINATES:(u1,v1)(t-1)
DISTANCE:(x1,y1)(t-1)
VELOCITY:v1(t-1)
NUMBER:N1(t-1)

COORDINATE INFORMATION

FEATURE INFORMATION

P31

INTEGRATION

OBSERVED VALUE AT TIME t

BBox ID:B1(t)
BBox COORDINATES:(u1,v1,w,h)(t)
DISTANCE:(x1,y1)(t)
VELOCITY:v1(t)
NUMBER:N1(t)

P32

MATCHING

FEATURE INFORMATION MATCH LIST

N1(t)=N1(t-1)
⋮

MISMATCH LIST OF TRACKING OBJECT AT TIME t-1

ID2(t-1)
ID3(t-1)
⋮

MISMATCH LIST OF OBSERVED VALUE AT TIME t

B2(t)
B3(t)
⋮

P33

PAIR OF TRACKING OBJECT AT TIME t-1 AND OBSERVED VALUE AT TIME t

Tracking ID:ID1(t-1)
BBox COORDINATES:(u1,v1)(t-1)
DISTANCE:(x1,y1)(t-1)
VELOCITY:v1(t-1)
NUMBER:N1(t-1)

BBox ID:B1(t)
BBox COORDINATES:(u1,v1,w,h)(t)
DISTANCE:(x1,y1)(t)
VELOCITY:v1(t)
NUMBER:N1(t)

Tracking ID:ID2(t-1)
BBox COORDINATES:(u2,v2)(t-1)
DISTANCE:(x2,y2)(t-1)
VELOCITY:v2(t-1)
NUMBER:N2(t-1)

BBox ID:B4(t)
BBox COORDINATES:(u4,v4,w,h)(t)
DISTANCE:(x4,y4)(t)
VELOCITY:v4(t)
NUMBER:N4(t)

KALMAN FILTER ~P34

TRACKING OBJECT AT TIME t

Tracking ID:ID1(t)
BBox COORDINATES:(u1',v1')(t)
BIRD'S-EYE VIEW COORDINATES:(x1',y1')(t)
VELOCITY:v1(t)
NUMBER:N1'(t)

34

Fig. 16

Fig. 17

Fig. 18

EP 4 140 815 A1

Fig. 18

Fig. 19

<table>
<tr><td colspan="2" align="center">**INTERNATIONAL SEARCH REPORT**</td><td colspan="2">International application No.<br>PCT/JP2021/024671</td></tr>
</table>

**A. CLASSIFICATION OF SUBJECT MATTER**
Int. Cl. B60R1/00(2006.01)i, G08G1/16(2006.01)i, G06T7/00(2017.01)i, G06T7/246(2017.01)i
FI: G06T7/246, G06T7/00 650B, G08G1/16 C, B60R1/00 A
According to International Patent Classification (IPC) or to both national classification and IPC

**B. FIELDS SEARCHED**

Minimum documentation searched (classification system followed by classification symbols)
Int. Cl. B60R1/00, G08G1/16, G06T7/00, G06T7/246

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2015-32133 A (HITACHI KOKUSAI ELECTRIC INC.) 16 February 2015 (2015-02-16), paragraphs [0014]-[0018], [0050], fig. 10, paragraphs [0014]-[0018], [0050], fig. 10 | 1-7, 11, 19-20<br>8-10, 12-18 |
| Y | JP 2018-180810 A (PANASONIC INTELLECTUAL PROPERTY CORPORATION OF AMERICA) 15 November 2018 (2018-11-15), paragraph [0033] | 8-10, 12-16 |
| Y | JP 2007-522915 A (RODRIGUEZ, Milton) 16 August 2007 (2007-08-16), paragraph [0024] | 10, 12 |
| Y | JP 2014-10765 A (SUMITOMO ELECTRIC INDUSTRIES, LTD.) 20 January 2014 (2014-01-20), paragraph [0029] | 12 |

☒ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07.09.2021 | Date of mailing of the international search report<br>14.09.2021 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| International application No. |
|---|
| PCT/JP2021/024671 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2018-36769 A (TOPCON CORP.) 08 March 2018 (2018-03-08), paragraphs [0030], [0031] | 14-15 |
| Y | JP 6671568 B1 (MITSUBISHI ELECTRIC CORP.) 25 March 2020 (2020-03-25), paragraph [0026] | 16 |
| Y | JP 2016-46639 A (SECOM CO., LTD.) 04 April 2016 (2016-04-04), paragraphs [0019], [0020], [0023] | 17-18 |
| Y | JP 2009-55139 A (HITACHI KOKUSAI ELECTRIC INC.) 12 March 2009 (2009-03-12), paragraph [0030] | 18 |
| A | JP 2020-9174 A (TOYOTA MOTOR CORP.) 16 January 2020 (2020-01-16), paragraph [0041] | 1-20 |

Form PCT/ISA/210 (continuation of second sheet) (January 2015)

| Patent Documents referred to in the Report | Publication Date | Patent Family | Publication Date |
|---|---|---|---|
| JP 2015-32133 A | 16.02.2015 | (Family: none) | |
| JP 2018-180810 A | 15.11.2018 | (Family: none) | |
| JP 2007-522915 A | 16.08.2007 | US 2005/0112275 A1 paragraph [0035] WO 2005/051718 A2 EP 1687101 A2 CA 2543268 A1 CN 1886205 A | |
| JP 2014-10765 A | 20.01.2014 | (Family: none) | |
| JP 2018-36769 A | 08.03.2018 | (Family: none) | |
| JP 6671568 B1 | 25.03.2020 | (Family: none) | |
| JP 2016-46639 A | 04.04.2016 | (Family: none) | |
| JP 2009-55139 A | 12.03.2009 | US 2009/0052739 A1 paragraph [0050] | |
| JP 2020-9174 A | 16.01.2020 | US 2020/0014857 A1 paragraph [0074] CN 110704663 A | |

Form PCT/ISA/210 (patent family annex) (January 2015)

**EP 4 140 815 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H896297 A